# EUROPEAN PATENT SPECIFICATION

(11) **EP 1 806 870 B1**
(45) Date of publication and mention of the grant of the patent: **22.09.2010**
(21) Application number: 06290213.5
(22) Date of filing: 06.01.2006
(51) Int. Cl.: H04W 4/06, H04L 12/18

(54) **Method for providing data and data transmission system**
Verfahren zur Bereitstellung von Daten und Datenübertragungssystem
Procédé pour la mise à disposition de données et système de transmission de données

(43) Date of publication of application: 11.07.2007
(73) Proprietor: Alcatel Lucent, 75008 Paris (FR)
(72) Inventor: Faucheux, Fréderic, 75015 Paris (FR); Bizouarn, Erick, 92160 Antony (FR)
(74) Representative: Schmidt, Werner Karl

(56) References cited:
- EP-A- 1 434 385
- US-A1- 2003 206 549
- US-A1- 2005 259 584

## Description

### Technical field of the Invention

The present invention relates generally to data transmission systems, in particular-but not exclusively - for mobile radio based communication. More specifically, the present invention relates to a method for providing data from a server to a plurality of end-users via a communication network and to a data transmission system comprising a server, a plurality of end-users, and a communication network linking the end-users with the server.

### Background of the invention

In a local network, the users of the network (hereinafter also referred to as "end-users") have to share the available bandwidth for data transmission. The case of a radio network, where the bandwidth is of high value, it is critical to be able to save as much bandwidth as possible for to enable the users to request multimedia application data or the like, the transmission of which generally demands a good bit rate.

To this end, prior art data transmission systems have been devised such that in case several users in the same area request the same data content, the corresponding data is sent only once over the network while making its reception possible for different end-users simultaneously. This prior art approach is referred to as "multicast". In the case of multicast, the individual end-users subscribe to a certain multicast address, and the data is then sent to the multicast address from which it can be received by several users simultaneously. Thus, data is sent over the network only once.

US 2003/206549-A discloses a method that enables complete datagram reception by a plurality of clients using a UDP multicast transport mechanism, wherein missing packets are re-transmitted from a server using either a multicast transport mechanism or a unicast connection, as a response to a request of a re-transmission.

EP 1 434 385-A discloses a system for overload protection in a data network for information delivery, comprising a server to transmit a plurality of unicast content messages having unicast and distribution capabilities; a message interceptor comprising a computer for receiving the plurality of unicast content messages with the identical content and grouping the plurality of unicast content messages with the identical content into a distributable content message, the computer adapted for communicating the distributable content messages to the plurality of terminals.

However, the above-described prior art solution suffers from the disadvantage of being operable only if the multimedia content is a live stream, such that all the recipients receive exactly the same content at exactly the same time. Additionally, said prior art approach requires a special setup of the multimedia server, as the latter must be capable of serving a data stream to said multicast address. Furthermore, all of the elements in the network which take part in data transmission, i.e. server, routers, clients, etc. must be capable of multicast and have to be devised in a special way in order to know how to handle (sending, processing, receiving) the corresponding data, which leads to an increase in overall system costs.

In this way, the above-described prior art approach is not suitable for non-live content and will not be operable if some elements of the network (including in particular the multimedia server) are not capable of multicast.

It is the object of the present invention to provide a method for providing data and a data transmission system which achieve a reduction of used bandwidth during data transmission to a plurality of end-users without suffering from the above mentioned disadvantages, wherein the proposed solution should also be operable if a plurality of end-users request the same data in an overlapping but not necessarily simultaneous fashion. Furthermore, the present invention aims at providing an access point and an end-user terminal as well as a computer program product, which can be used for to set up the above mentioned data transmission system.

### Summary of the invention

The invention provides for a method for providing data from a server to a plurality of end-users via a communication network as claimed in the claims 1-8.

Thus, as a general idea underlying the present invention, at least part of a multimedia content which is requested non-simultaneously by several users is sent only once to said plurality of users in multicast mode in order to save a valuable bandwidth. Then, after termination of the multicast transmission or in parallel therewith, those end-users which requested the data at later times (as compared with the first end-user who initially requested the data) request (and receive) only the missing data for separate transmission. However, said separate transmission, too, can benefit from the inventive concept, if at least part of the missing data is again requested in an overlapping fashion by a plurality of end-users.

The present invention is particularly useful in radio based data transmission systems in which a plurality of end-users are present in the same radio cell around a network access point (or base station), wherein at least the communication path between said access point, which enables access to the communication network by the end-users, and the end-users is a radio based communication path, such that the terminal routing section from the access point to the end-users effectively presents a bottle neck in the data transmission. In other words: in radio networks, the radio transmission link between the end-user terminals and the base station is the critical path. In order to solve the above-defined "bottle neck problem", the present invention generally aims at optimising the data transfer between a given access point (base station) and the associated end-users by sharing the transmission of "common data". To this end, in the context of the present invention it has to be detected which part of the transmitted data actually constitutes said common data. As such a detection obviously requires at least some computational (data processing) effort, the present invention will provide a beneficial effect as long as the time gained owing to the above-described data transfer optimisation exceeds the additional computation time.

The data transferred to the end-users is either consumed without delay (classical multicast mode, e.g. in the case of the first end-users) or stored in a local memory (hereinafter also referred to as "cache" or "end-user buffer") by the different end-user terminals (e.g., in the case of the second end-users). Therefore, in an examplary data transmission system, the second end-users comprises storage means, e.g. a local cache memory, adapted to store the multicast data and the requested missing data.

In another embodiment of the method in accordance with the present invention, the first end-user sends a message to an access point (base station) of the communica tion network for to trigger the transmission of the data. The access point then marks individual data packets of the transmitted data with a session identifier (session ID). For instance, a first end-user requests some multimedia content, e.g. a video stream, from the server. A corresponding message is then send from said first end-user to the network access point in order to trigger the transfer. This allows the access point to identify the packets in the multimedia stream with a session identifier in an easy way. Each session identifier is associated with a URI (Uniform Resource identifier) of the corresponding multimedia link.

However, in accordance with another embodiment of the present invention, the existence of a particular message between the first end-user and the access point is not mandatory: Thus, the network access point may simply detect reception of the data by the first end-user, e.g. from a packet header, transfer the data to the first end-user, and store a signature of the data as a session identifier (session ID). In this way, the access point effectively scans the data packets exchanged between the first end-user and the network to identify multimedia sessions or other transmissions requiring large amounts of bandwidth, to which the proposed solution can be applied.

In each case, however, the network access point is able to identify transmission of multimedia data to a first end-user present in a corresponding radio cell such that in accordance with a further embodiment of the inventive method the access point may scan data requested by the second end-user, detect matching of the session identifier and a signature of the data requested by the second end-user and identify both data transfers, i.e. the ongoing data transfer to the first end-user and the requested data transfer by the second end-user, as a common session for establishing the multicast transmission.

In a further example of the method, the base station simply informs the second end-user about the current session ID of the ongoing data transfer to the first end-user, such that the second end-user may receive the same data contents from that time on.

Preferably the second end-user stores the upcoming data packets (originally directed to the first end-user) in a local cache / buffer. The second end-user generally will not be able to use them straight away, because it first needs to obtain the beginning of the data stream, i.e. the data transferred to the first end-user only prior to the request by the second end-user. To this end, the second end-user establishes a connection to the server in order to request the missing part of the data stream.

In a corresponding further example of the data transmission system the second end-user comprises decoding means adapted to decode the requested missing data together with the multicast data. The combined decoded data can then be used by the application layer, e.g. a media player used for displaying the data on an output means such as a screen.

However, since at least some part of the data stream is already present on the second end-user prior to requesting said missing data, in another example of the data transmission system the second end-user comprises decoding means adapted to decode at least part of the received multicast data and / or the received missing data prior to reception of the complete multicast and missing data.

With certain servers, requesting only part of a data stream is not possible. In this case and in accordance with the present invention, after termination of or in parallel with the multicast transmission, a second end-user requests the entire data transmitted to the first end-user from the server. Upon transmission of the requested data, the access point filters out the data already received by the second end-user during the multicast transmission. Correspondingly in the data transmission system in accordance with the present invention, the access point comprises filter means adapted to filter out data already received from a requested data transmission to the second end-user.

In an examplary method, in order to circumvent the need to change an application layer of the individual end-user terminals when implementing the proposed solution, requesting the missing data is accomplished by a communication layer of the second end-user, which is distinct from an application using the data. In this way, and in accordance with another embodiment of the inventive method a communication layer issues a message to the server to skip receiving parts of the data that have already been received at the second end-user. In the context of said embodiment, the application preferably uses a well-known protocol, e.g. Real Time Streaming Protocol (RTSP), such that said communication layer may issue a protocol message towards the server in order to skip parts of the data stream, as already described above. However, in accordance with the present invention, such an optimisation is regarded as an optional modification.

In a corresponding further embodiment of the data transmission system in accordance with the present invention the second end-user comprises a communication layer distinct from the application, said communication layer comprising a sending means adapted to send a message to the server, said server being adapted to skip providing data to the second end-user upon a reception of said message.

According to said third aspect of the present invention, features of the method in accordance with said first aspect of the present invention and features of the data transmission system in accordance with said second aspect of the present invention can be implemented by employing a suitable computer program product. In a further example of the computer program product said computer program product is operable to enable the second end-user to decode the requested missing data together with the multicast data, as already stated above.

In another example of the computer program product, said computer program product is operable to enable the second end-user to decode at least part of the received multicast data and / or the received missing data prior to reception of the complete multicast and missing data.

In accordance with the present invention, said computer program product is operable to enable the access point of said communication network, to filter out data already received from a requested data transmission to the second end-user.

Furthermore, in still another example of the computer program product, said computer program product is operable to set up at the second end-user a communication layer distinct from the application and to enable a second end-user to send a message to the server, said message commanding the server to skip providing data to the second end-user upon reception of said message.

Further advantages and characteristics of embodiments in accordance with the present invention can be gathered from the following description given by way of example only with reference to the enclosed drawings. The features mentioned above as well as below can be used in accordance with the present invention either individually or in conjunction. The embodiments mentioned are not to be understood as an exhaustive enumeration but rather as examples with regard to the underlying concept of the present invention.

### Brief description of the drawings

- Fig. 1: is a schematic diagram of the data transmission system in accordance with the present invention;
- Fig. 2: is a schematic block diagram of an end-user terminal in accordance with the present invention,
- Fig. 3: is a schematic block diagram of a communication network access point in accordance with the present invention;
- Fig. 4: is an illustrative diagram of an embodiment of the method for providing data in accordance with the present invention;
- Fig. 5: is an illustrative diagram of another embodiment of the method for providing data in accordance with the present invention;
- Fig. 6: is a first example of messages used in an embodiment of the method in accordance with the invention; and
- Fig. 7: is another example of messages used in an embodiment of the method in accordance with the invention.

### Detailed description

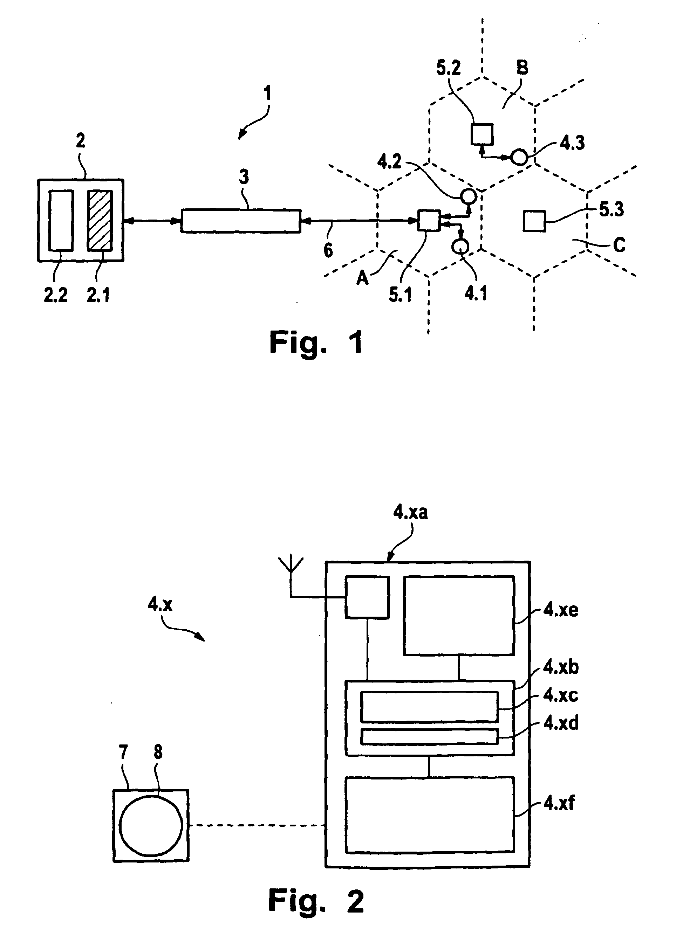

Fig. 1 shows a schematic diagram of a data transmission system 1 in accordance with the present invention. The data transmission system 1 comprises a content server 2, e.g. a multimedia server, operably connected to a communication network 3 for providing data, e.g. multimedia data 2.1 or program files 2.2, to a plurality of end-user terminals (hereinafter also referred to as "end-users") 4.1 - 4.3 via a number of base stations (hereinafter also referred to as "access points") 5.1 - 5.3. In the embodiments of Fig. 1, the access points 5.1 - 5.3 are devised as radio access points and communicate by radio transmission with the respective end-users 4.1 - 4.3 located inside a respective radio cell A, B, C extending around a respective location of each access point 5.1 - 5.3. For a reason of clarity, only the connection 6 between the access point 5.1 of radio cell A with the communication network 3 is shown explicitly. In practise, the other access points 5.2, 5.3, too, are connected with the network 3 in a similar way.

In the embodiment of Fig. 1, the end-user terminals 4.1 - 4.3 are devised as mobile terminals, i.e., they are free to move inside a given radio cell, e.g. radio cell A, and are also free to cross into another (adjacent) radio cell, e.g. from radio cell A into radio cell B.

In accordance with the above description, data transfer from an access point 5.1 - 5.3 to an end-user located inside a respective radio cell A - C is achieved on the basis of radio transmission links between an access point and an end-user. However, the present invention is not limited to such radio-based transmission links. In this way, in an alternative embodiment of the data transmission system 1 in accordance with the present invention, data transmission between the access points and the end-users could be ensured using wired transmission links.

Fig. 2 shows a schematic block diagram of an end-user terminal 4.x (x = 1, 2, 3) for use in the data transmission system 1 of Fig. 1. The end-user 4.x comprises receiving / sending means 4.xa for receiving data from and for sending data to an access point of a given radio cell. The end-user 4.x further comprises data processing means 4.xb for running an application 4.xc, e.g. a media player. Furthermore, the data processing means 4.xb comprise decoding means 4.xd. Apart from the data processing means 4.xb the end-user 4.x further comprises output means 4.xe, e.g. viewing or listening means, as well as storage means 4.xf in the form of a local cache memory or end-user buffer. As depicted by means of a dashed line in Fig. 2, the end-user terminal 4.xa can be connected with an input device 7 adapted to read a suitable computer readable medium 8, e.g. a CD-ROM or a DVD-ROM device.

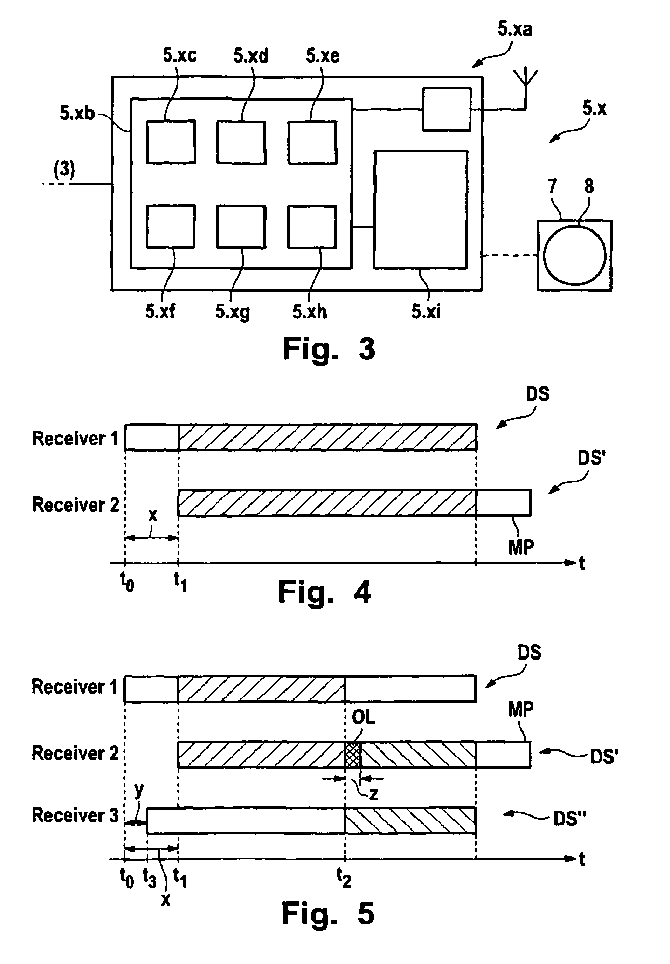

Fig. 3 shows a schematic block diagram of an access point 5.x for use in the data transmission system 1 of Fig. 1. The access point 5.x comprises sending / receiving means 5.xa for sending data to and for receiving data from an end-user 4.x (Fig. 2), 4.1 - 4.3 (Fig. 1). Furthermore, the access point 5.x comprises data processing means 5.xb, which provide multicast connection means 5.xc, data scanning means 5.xd, identifying means 5.xe, matching means 5.xf, request detecting means 5.xg, and filter means 5.xh, the function of which will be explained later. In operative connection with the data processing means 5.xb the access point 5.x further comprises storage means 5.xi. As indicated by means of a dashed line in Fig. 3, the access point 5.x, too, can be connected with an input device 7, e.g. a CD-ROM drive, for reading suitable computer readable media 8, e.g. a CD-ROM.

During operation of the data transmission system 1 (Fig. 1) in accordance with the present invention, a first end-user, e.g. end-user 4.1, requests data, e.g. multimedia data 2.1, from the server 2. Said data is required by the application 4.xc running on the data processing means 4.xb of the requesting first end-user 4.1. In the embodiment shown, application 4.xc operates on the multimedia data received from the server 2 via the network 3 and the access point 5.1 and presents the data to a user (not shown) by means of the output means 4.xe, which can be devised as viewing and / or listening means, as stated above. Preferably, the end-user 4.x receives the requested data via the receiving / sending means 4.xa over a radio transmission link to the access point 5.1 in the form of a real time data stream, which is decoded in real time by the decoding means 4.xd and then provided to the application 4.xc.

In this context, all of the program code needed to generate the above-mentioned means provided by the data processing means 4.xb of the end-user terminal 4.x can be provided to the end-user 4.x by means of a suitable computer program product comprised on the computer readable medium 8 present inside the input device 7.

In (at least partly) radio based data transmission systems, such as the data transmission system 1 of Fig. 1, the radio transmission link between an access point and the end-users present inside the radio cell surrounding said access point effectively constitutes a bottle neck of the data transmission to the end-users due to the large amount of required bandwidth, in particular during transmission of multimedia data streams, which require a high transmission bit rate. In order to save bandwidth the present invention proposes that, when the same multimedia content (data) is requested non-simultaneously by several end-users in a given radio cell, e.g. end-users 4.1, 4.2 both located inside radio cell A of Fig. 1, the data is - at least partly - sent only once from the access point, e.g. access point 5.1, to the end-users 4.1, 4.2. In other words: During the above-described data transmission to a first end-user, e.g. end-user 4.1, another / a second end-user, e.g. end-user 4.2, requests the same data, e.g. multimedia data 2.1, from the server 2. The access point, e.g. access point 5.1, then assigns a session identifier (session ID) to the data stream already sent to the first end-user 4.1 and provides said session ID to the second end-user 4.2 whereupon said data stream is transmitted to both the first and the second end-users 4.1, 4.2 in the form of a multicast transmission established by the multicast connection means 5.xc of the access point 5.1. Note that in this way and in contrast with the prior art, only the access points and the end users need to be capable of multicast, whereas the server provides the requested data as if it were requested by a single end-user only.

For establishing said session ID, which is done by the identifying means 5.xe of access point 5.1, the access point first detects that the first end-user 4.1 is receiving some data stream from the network 3. In accordance with the present embodiment, this is done by identifying a protocol, e.g. RTSP, by means of a corresponding packet header in the identifying means 5.xe, and by using a destination port (not shown) of said packets. All of the data packets are then transferred to the first end-user 4.1. A signature of the packets is stored in the storage means 5.xi of the access point 5.1. Said signature of the data packets may be a selection of packets or a list of check sums for the packets. In the storage means 5.xi, said signature information is only stored during a limited time in order not to use to many resources for storing said information.

When the second end-user 4.2 requests the same multimedia data 2.1 from the server 2, said request is detected by the request detecting means 5.xg of the access point 5.1. Then, while scanning the data packets to be transferred to the second end-user 4.2 by means of the data scanning means 5.xd, the access point 5.1 detects that a signature for the new data transfer to the second end-user 4.2 matches the signature of the data transfer to the first end-user 4.1 as comprised in the storage means 5.xi. According to the embodiment of Fig. 3, said signature matching is accomplished by means of the matching means 5.xf, which are adapted to compare a signature of said second data transfer with the stored signature of said first data transfer. If the matching means 5.xf issue a positive matching signal (not shown), both data transfers are identified as a common session on the access point 5.1. In this way - as stated before - the session ID of the first data transfer is provided to the second end-user 4.2, whereupon the data transfer to the first and second end-users 4.1, 4.2 is effectively continued as a multicast data transfer in order to save available bandwidth for data transmission in the radio cell A.

In an alternative to the above-described embodiment, the function of the request detecting means 5.xg can be provided entirely by means of the data scanning means 5.xd in connection with the identifying means 5.xe, which may be adapted to detect any transmission of multimedia data to an end-user via a given access point, such that the requested detecting means 5.xg might be left out from the access point 5.x depicted in Fig. 3. Otherwise, in an embodiment of the method in accordance with the present invention, a first end-user, e.g. end-user 4.1, may be adapted to announce its request of multimedia data from the server 2 by sending a corresponding message to "its" access point, i.e. access point 5.1, which would in turn be detected by the request detecting means 5.xg. In turn, the detecting means 5.xg will inform the identifying means 5.xe, such that a session ID may be associated with the requested data transfer, as already explained in detail above.

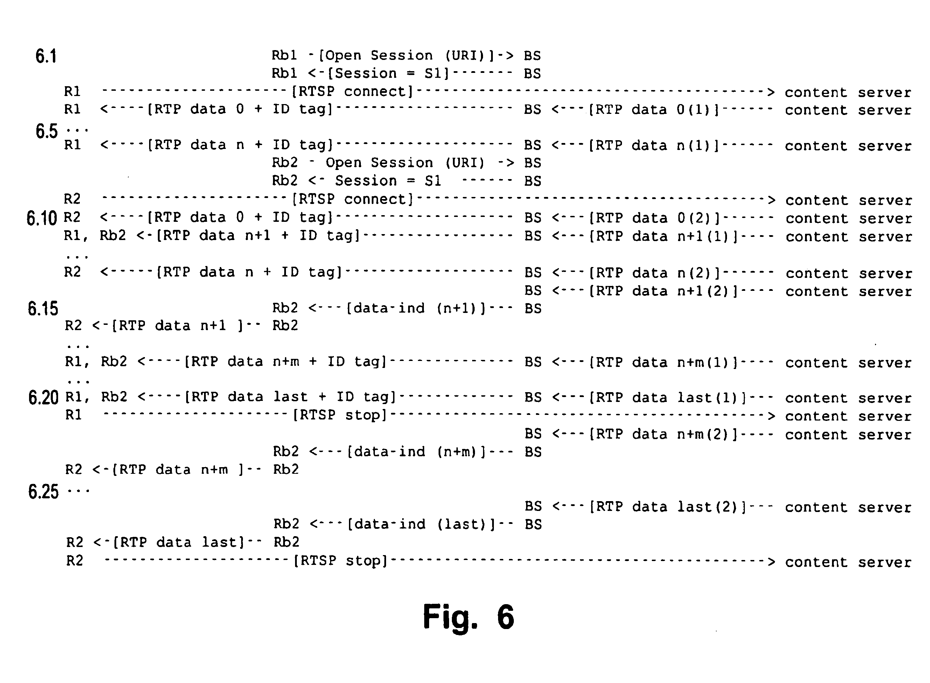

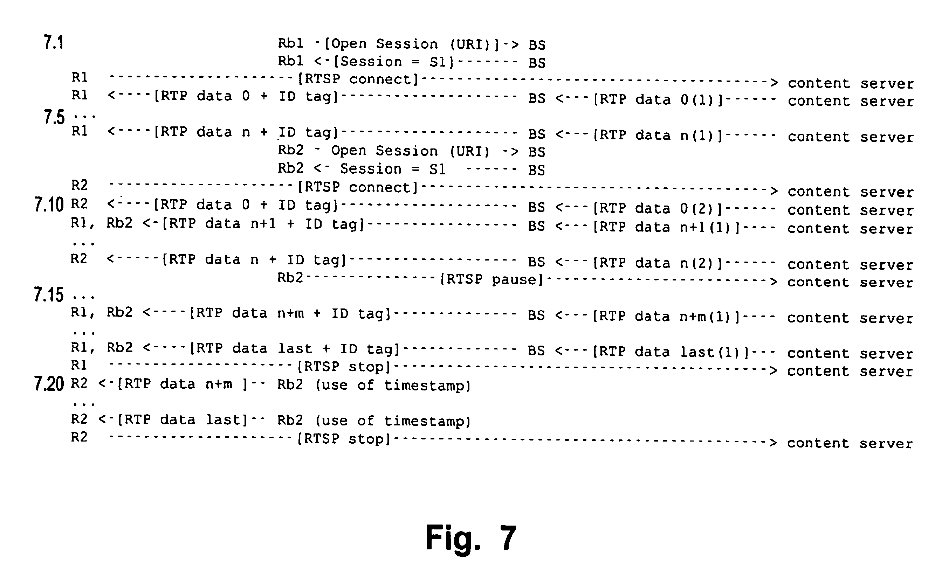

In prior art multicast procedures, requested data can only be transferred to a plurality of end-users in a simultaneous fashion. In contrast to this, the present invention has been particularly designed to provide data in a multicast fashion to a plurality of end-users even if they have not requested the data simultaneously. This aspect of the present invention will now be explained in detail with reference to Figs. 4 and 5, which both refer to a respective example in which the second end-user requests the missing data after termination of multicast data reception. Farther down, examples of parallel requests of missing data will be explained with reference to Figs 6 and 7.

Fig. 4 shows a data stream DS received by a first end-user ("Receiver 1 "), e.g. end-user 4.1 (Fig. 1), and a data stream DS' received by a second end-user ("Receiver 2"), e.g. end-user 4.2 (Fig. 1). In Fig. 4, transmission time is running from left to right (time axis t). First, receiver 1 requests some multimedia data. The request is transferred to the server, the transfer is started - as explained in detail above - and Receiver 1 receives the requested data, which can be consumed, e.g. displayed, immediately. In Fig. 4, the starting time of data transfer to Receiver 1 is denoted t0. At a later time, Receiver 2 requests the same multimedia data from the server. Receiver 2 sends a message to its access point, which comprises the URL (Uniform Resource Locator) of the request. As explained in detail above, the access point detects, that the same data content is already being transferred to another end-user / receiver in the current radio cell. Therefore, starting at time t1, all the remaining packets in the data stream DS (hashed area in Fig. 4) are being sent in multicast mode (data streams DS, DS'), to both Receiver 1 and Receiver 2 and are tagged with a common session ID. Accordingly, the access point sends a notification to a Receiver 2 to inform the latter about said session ID. Receiver 2 stores the arriving multicast data packets (hashed area in data stream DS'), which were originally directed to Receiver 1, in its cache (storage means 4.xf; Fig. 2), but generally cannot use them immediately for the application 4.xc, because it first needs to obtain the beginning of the data stream, i.e. the missing data sent to Receiver 1 during time interval x = t1 - t0, i.e. prior to the multimedia request by Receiver 2. A separate (unicast) connection to the server is then requested by Receiver 2 - either after having received the multicast data or in parallel with receiving the multicast data - for to receive the missing part of the data stream DS, said missing part being denoted MP in Fig. 4. In other words, if Receiver 2 starts its data transfer session at x time units after Receiver 1, then from this point in time, all of the stream data sent to Receiver 1 are also received at Receiver 2. Then, in order to play the complete stream, Receiver 2 only has to obtain the beginning of the stream, which corresponds to said time interval x, from the server.

As stated above, in accordance with the present invention Receiver 2 can request the missing data either after having received the multicast data or in parallel with receiving the multicast data. While both behaviours are indeed possible, the latter (parallel reception; cf. Figs 6, 7 below) could be the preferred one, as it allows the end-user to access the data as soon as possible. The other behaviour (request after reception) should be reserved to some cases in which the said missing part is not to be used immediateley by the end-user, e.g. in case of file download.

Since with some server types it might not be possible to request only the missing part MP of the data stream DS, according to the embodiment of Fig. 3, the access point provides filter means 5.xh, such that Receiver 2 (the second end-user) only receives said missing data over the radio transmission link, thus effectively saving bandwidth in accordance with the general idea of the present invention.

Fig. 5 illustrates the case in which a mobile second end-user, e.g. end-user 4.2 in Fig. 1, crosses the border of a radio cell thus moving into an adjacent radio cell, e.g. from radio cell A into a radio cell B, while receiving multicast data from an access point. For the approach of the present invention to be workable, it is assumed that another end-user (Receiver 3), e.g. end-user 4.3 (Fig. 1), located in radio cell B is receiving the same data as Receivers 1 and 2 according to Fig. 4 through an overlapping data transmission from its access point, e.g. access point 5.2. In this context, the term "overlapping transfer" signifies that at least part of a corresponding data stream DS" requested and received by Receiver 3 in radio cell B overlaps in time with respect to the data transfer DS to Receiver 1 in radio cell A (cf. Fig. 5).

In the example of Fig. 5, the mobile end-user "Receiver 2" moves from radio cell A to radio cell B, which are managed by two different access points, i.e. access points 5.1, 5.2 of Fig. 1. In radio cell A, the mobile Receiver 1 starts receiving a data stream DS at time t0. In an overlapping fashion, in radio cell B, Receiver 3 starts receiving the same data in the form of data stream DS" at a later time t3 = t0 + y time units, i.e. y = t3 - t0. At another time t1 (cf. Fig. 4), the mobile Receiver 2 requests the same data in the form of a data stream DS' at time t1 = t0 + x time units, with x > y. As in the previous example of Fig. 4, Receiver 2 receives part of the data requested by Receiver 1 via multicast in radio cell A. At a time t2, Receiver 2 moves from radio cell A into a radio cell B. Receiver 2 then informs the access point for radio cell B of the URL for the requested data stream. As explained in detail above with reference to Figs. 1 to 3, Receiver 2 receives in return from the access point of radio cell B the session ID for the data stream transfer in radio cell B, which may - without limitation - be different from the particular session ID used in radio cell A. In Fig. 5, the multicast data in radio cell A are indicated by means of single-hash areas of data streams DS, DS'. The multicast data in radio cell B are indicated in Fig. 5 by means of double-hash areas in the data streams DS', DS". Owing to the timing difference y between data transfers to Receiver 1 in radio cell A and to Receiver 3 in radio cell B, during a short period of time denoted OL in Fig. 5, wherein a duration z of the interval OL is equal to y, Receiver 2 receives data from the access point of radio cell B which is already in its cache, i.e. which has already been transferred by the access point of radio cell A. Thus, Receiver 2 has the choice to either discard, check or replace said data. Then receiver 2 stores the remaining data in its cache, requests (and receives) the missing part MP, and uses the combined data when needed.

It is a particularly interesting feature of the proposed solution, that a gain in bandwidth for a given radio cell increases as the number of end-users receiving the same data stream inside the radio cell increases.

The advantageous effect of the basic idea in accordance with the present invention becomes visible when focussing on the fact that a given access point does not need to send the data requested by the second end-user entirely for a second time. For instance, if the requested multimedia data has a size of one kilobyte for a bit rate of, e.g., 200 kbps at 25 fps (frames per second) for video content, the signal data exchanged between the end-users and their access point in order to establish the above-mentioned (multicast) transmissions amounts to only 16 bytes, such that the gain in bandwidth is 196 kbps, i.e. 98 %.

As compared with prior art multicast solutions, another advantage of the present invention resides in the fact that only the end-user terminals and the access points have to be modified whereas the whole data transmission system has to be modified in order to support multicast, as stated above.

In the foregoing description, the basic concept of the present invention has been explained in connection with the transfer of multimedia data from a server to a plurality of end-users. However, it is also possible to use the same techniques for non-multimedia purposes, such as downloading of big files from the server, e.g. data files 2.2 in Fig. 1.

Referring again to Figs. 4 and 5, after termination of the multicast data transfer Receiver 2 generally still has to request (and obtain) the missing part MP of the data stream DS in order to be able to access the data contents - with the exception of live content which, by definition, cannot be sent again. In this context, the end-user buffer **/** cache 4.xf is used to keep track of which parts of the data have been received and which parts are still missing. In this way, the buffer /cache 4.xf represents a (lower) communication layer, which functions such that the inventive concept can be implemented without the need to modify the application layer (i.e., application 4.xc). The application 4.xc itself, which is running on the data processing means 4.xb of the end-user 4.x (Fig. 2), does not have any knowledge of which part is missing from the data stream and only needs to receive the data packets from the buffer 4.xf at the moment they would be received in a "normal" data stream, i.e. a unicast data stream transferred directly and uniquely to the second end-user. As stated before, the application 4.xc preferably uses a standard protocol such as RTSP. In this case the buffer layer 4.xf may itself issue some protocol message via the sending / receiving means 4.xa towards the server in order to skip those parts of the data stream that have already been received.

Fig. 6 shows an example of the messages passed between the access point (base station) and two end-users (receivers) located in a common radio cell in accordance with a further embodiment of the invention for providing multimedia content by streaming of a Video-On-Demand (VOD) movie. In Fig. 6, R1 and R2, respectively, denote a first and second receiver (i.e., first and second end-users). Furthermore, BS denotes the base station (i.e., an access point). Rb1 and Rb2, respectively, denote the buffer levels (end-user buffers / caches) of receiver R1 and receiver R2, respectively. The end-user buffers are used for storing data packets received from the BS before sending them back to a suitable application on receivers R1, R2 (cf. Fig. 2). If a given data packet was originally directed to the first end-user R1, and sent in multicast towards both first and second end-users, then it whould be received by the application on first end-user as well as by the buffer of second end-user. Another possibility would be that the data packet is first received by the buffer of first end-user instead of directly being received by the application in order to have a more homogeneous behaviour. In this case the first end-user buffer would immediately have to forward the data packet to the application, so the first end-user buffer apparently has no action on the packet.

In the example of Fig. 6, no skip optimisation for skipping already received data is used. In Fig. 6 (and in subsequent Fig. 7) individual messages are shown in square brackets [...] and are numbered linewise from top to bottom: Line 6.1 is a request from the buffer level Rb1 of receiver R1 to the base station BS for to open the transmission from a particular unified resource indicator (URI). In line 6.2 the base station BS sends a corresponding session ID to the buffer level of receiver R1. In line 6.3 receiver R1 establishes an RTSP connection with the server. With line 6.4 the server sends an initial RTP data packet directed to receiver R1 (data 0(1)) to the base station BS, which tags the data with an ID and transfers it to receiver R1, as already explained in detail with reference to Figs 1 to 5. This procedure goes on (line 6.5) until in line 6.6 the server sends data packet "data n(1)" to the base station BS, which again tags it with an ID and forwards it to the receiver R1. In line 6.7 buffer level Rb2 of receiver R2 requests opening a transfer session to the same URI as receiver R1. In this way, Rb2 effectively serves as a requesting means adapted to request missing data not received with the multicast data from the server, as will become apparent later. Accordingly, in line 6.8 the base station BS returns to the buffer level Rb2 the same session ID (S1) as is used for the data transfer to receiver R1. In line 6.9 the receiver R2 establishes an RTSP connection with the server. At the moment R2 requests the movie, R1 has already received the beginning of the same movie (the first "n" packets). Therefore, the part of the movie that R2 will receive through the multicast session (cf. Fig. 4) together with R1 will range from data packet "n+1" until the end of the data stream, i.e. "data last". However, R2 still needs to be able to play the beginning of the movie as soon as possible, since the user does not want to wait for the end of a parallel movie session before his/her movie begins. To this end the streaming of packets "0" to "n" - also referred to as "the missing packets / data" (cf. above) - is done just after the opening of the session for R2 (lines 6.10, 6.13). In parallel to this (line 6.11) data packets "n+1" and higher are sent to R1 (for viewing) and to Rb2 (for buffering). This procedure continues until R2 has received (and used) packet "data n(2)", cf. line 6.13. Since there is no skip optimisation, in subsequent line 6.14 the server continues to provide "data n+1" to R2, although said data packet as well as subsequent packets are already present in the buffer Rb2 of R2 (cf. line 6.11). However, in this case the base station effectively functions as a filter and only sends a data-indication message "data-ind (n+1)" to Rb2, line 6.15. Said data-indication message is a very small message that only contains a session identifier and a packet number. Its goal is to notify the end-user buffer Rb2 that a previously received packet is to be delivered on reception of this data-indication message to the application, i.e. receiver R2 (cf. line 6.16). Note that "data n+1" is a multimedia packet, and is supposed to be rather large (several hundreds of bytes). On the other hand "data ind (n+1)" is a control packet, and is designed to be small (only a few bytes). While the larger message is sent only once over the link between base station BS and end-user, the smaller control message ensures that the packet is received by the application of the second end-user R2 at the same time as in a "normal" stream as, e.g., received by receiver R1.

This procedure is continued until both R1 and Rb2 have received the last packet "data last" from the server (line 6.20). Then, line 6.21, R1 terminates the transfer session. At that time, R1 has received (and used) the packets up to "data n+m-1 ". Thus, in this example it is assumed that the R1 session has not finished when all the missing part data has been sent to R2. Then, although the server keeps transferring packets "data n+m(2)" through "data last(2)", lines 6.22, 6.26, since the data comprised therein is already present in buffer Rb2, the base stations filters out said transfer and replaces the packets with smaller data-indication massages, lines 6.23, 6.27. In this way, the data can be provided to R2 (lines 6.24, 6.28) at the right time for proper utilisation. Finally, in line 6.29, receiver R2, too, terminates the transfer.

When dealing with live content rather than VOD, the behaviour is different, because the packets "0" to "n" are never to be sent to receiver R2 in this case.

Fig. 7 shows an example of messages passed between an access point (base station) and two end-users (receivers) located in a common radio cell in accordance with a further embodiment of the invention for providing multimedia content by streaming of a Video-On-Demand (VOD) movie, using skip optimisation. Only the main differences with respect to the embodiment of Fig. 6 will be explained in detail here. In the above-described example (cf. Fig. 6) the creation and sending of data indication messages is triggered on the base station BS by the (second) reception of data packets already sent in multicast. Using the skip optimization according to Fig. 7 - which allows reducing the data traffic on the network between the base station BS and the server - signifies that the content server will only send the data once, except for the "missing part". To this end, a pause command is sent from Rb2 to the server in line 7.14 of Fig. 7. Therefore, it is impossible for the base station BS to create and send the "data-indication" messages of Fig. 6, and the end-user buffer Rb2 needs to use the timestamp (which is a field of main streaming protocols such as RTSP) to know when to deliver the data to the application. Because in this case the "data-indication" messages of Fig. 6 are not sent from the base station BS, the buffer is not notified otherwise as to when to forward the data to the application. In the present Fig. 7 this is shown explicitily only for later times in lines 7.20-7.22 for "data n+m" to "data last". However, after the pause command in line 7.14 the same procedure is applied with respect to "data n+1" to "data n+m-1" already present in buffer Rb2, cf. line 7.11. In parallel, as shown in lines 7.16-7.18 both R1 and Rb2 continue to receive "data n+m" through "data last".

Thus, for the case of Fig. 6, it is the corresponding data indication message generated by the base station that triggers the play of an RTP packet. On the contrary, for the case of Fig. 7, it is the timestamp in the content of the buffered RTP data packet that indicates that this particular data should be played, such there is no need for external events.

Generally, in the context of the present invention, the situation may arise in which a first end-user requests some data, then a second end-user requests the same data at a later time and still some time later - after transmission of said data to the first end-user is finished - a third end-user requests the same data in conjunction with the request by said second end-user the transmission of the missing data from the beginning of the data stream (cf. Fig. 4). If the third end-user requests the same data as the second end-user, the transmission of any part of the data stream to the second end-user is still ongoing, then the method and system in accordance with the present invention will provide this part of the data stream to both the second and a third end-user. However, those parts of the data stream already received while the second end-user before the start of the transfer session to a third end-user, i.e. typically the beginning and the end of the data stream, will have to be requested / re-transmitted by / to the third end-user.

As has been stated before, a second end-user generally cannot use the received data stream (beginning of which is missing) right away. However, as the corresponding information is already present on the second end-user terminal, it is by definition usable by the application 4.xc (cf. Fig. 2). In order to use said information, the corresponding data must first be decoded using the decoding means 4.xd of the end-user 4.x. However, technical problems may arise when decoding a random part of the data stream. For instance, in video data such as in Fig. 6 and 7 there are several types of frames called I-, P-, and B-frames, respectively. Only the frames of type I, which represent typically about 10% of a total number of frames, can be decoded individually. P- and B- frames depend on I-frames previously sent. Therefore, an alternative approach in accordance with the present invention would comprise the step of waiting for an I-frame before starting to decode some of the data present on the second end-user terminal before the entire data stream has been received from the server. Assuming that decoding of the received packets is technically possible, then the second end-user is indeed able to use the received data stream in real time.

## Claims

1. A method for providing data from a server (2) to a plurality of end-user terminals (4.x, 4.1 - 4.3) via a communication network (3, 5.1 - 5.3), comprising the steps of:
- starting a transmission of the data to at least a first end-user terminal (4.1, R1);
- while transmitting the data to the first end-user terminal, upon detection of a request for transmission of the data by at least one second end-user terminal (4.2, R2), establishing a multicast transmission of the data to the first and the second end-user terminal;
**characterized by**
- requesting missing data (MP) not received with the multicast data at the second end-user terminal from the server;
- filtering out data already received by the second end-user terminal (4.2) during the multicast transmission by an access point (5.1).

2. The method of claim 1, wherein the first end-userterminal (4.1, R1) sends a message to an access point (5.1) of the network (3) to trigger the transmission of the data and wherein the access point (5.1) marks the data packets of the transmitted data with a session identifier (S1).

3. The method of claim 1, wherein an access point (5.1) of the network (3):
- detects reception of the data by the first end-user terminal (4.1, R1);
- transfers the data to the first end-user terminal;
- stores a signature of the data as the session identifier.

4. The method of claim 2, wherein the access point (5.1):
- scans data requested by the second end-user terminal (4.2, R2);
- detects matching of the session identifier and a signature of the data requested by the second end-user terminal;
- identifies the data transfer to the first end-user terminal and the requested data transfer to the second end-user terminal as a common session for establishing the multicast transmission.

5. A data transmission system (1), comprising:
- a server (2) comprising data (2.1, 2.2);
- a plurality of end-user terminals (4.x, 4.1 - 4.3) running an application (4.xc), which uses at least parts of the data;
- a communication network (3, 5.1 - 5.3) linking the end-user terminals with the server;
- at least one access point (5.1) with multicast means (5.xc) adapted to transmit data to a plurality of said plurality of end-user terminals simultaneously;
wherein the communication network is adapted to detect a request by a second end-user terminal (4.2) of said plurality of end-user terminals of data already being transmitted to a first end-user terminal (4.1) of said plurality of end-user terminals and to establish a multicast transmission of the data to said first and second end-user terminals upon detection of said request,
**characterized in that**
the second end-user terminal is adapted to request missing data not received with the multicast data from the server, wherein the at least one access point comprises filter means (5.xh) adapted to filter out data already received from a requested data transmission to the second end-user terminal (4.2).

6. The system of claim 5, wherein the second end-user terminal (4.2) comprises a communication layer (Rb2) distinct from the application (4.xc) and wherein the communication layer comprises sending means (4.xa) adapted to send a message to the server, the server being adapted to skip providing data to the second end-user terminal upon reception of said message.

7. A computer program product for use in a data transmission system (1), said data transmission system comprising:
- a server (2) comprising data (2.1, 2.2);
- a plurality of end-user terminals (4.x, 4.1 - 4.3) running an application (4.xc), which uses at least parts of the data;
- a communication network (3, 5.1 - 5.3) linking the end-user terminals with the server;
- a plurality of access points (3, 5.1-5.3) with multicast means (5.xc) adapted to transmit data to a plurality of said plurality of end-user terminals simultaneously;
wherein the computer program product is operable on the plurality of access points to enable the plurality of access points to detect a request by a second end-user terminal (4.2) of said plurality of end-user terminals of data already being transmitted to a first end-user terminal (4.1) of said plurality of end-user terminals and to establish a multicast transmission of the data to said first and second end-user terminals upon detection of a said request,
**characterized by**
enabling the second end-user terminal to request missing data (MP) not received with the multicast data from the server and by enabling the plurality of access points to filter out data already received by the second end-user terminal (4.2) during the multicast transmission.

8. An access point (5.x, 5.1 - 5.3) comprising:
multicast means (5.xc) adapted to transmit data to a plurality of end-user terminals simultaneously;
**characterized by**
filter means (5.xh) adapted to filter out data already received from a requested data transmission to the second end-user terminal (4.2);
the access point linking the plurality of end-user terminals (4.x, 4.1 - 4.3) with a server (2), wherein the access point comprises detection means (5.xd, 5.xg) adapted to detect a request by a second end-user terminal (4.2) of said plurality of end-user terminals of data already being transmitted to a first end-user terminal (4.1) of said plurality of end-users, and multicast connection establishing means (5.xc) adapted to establish a multicast transmission of the data to said first and second end-user terminals upon detection of said requests.

## Patentansprüche

1. Ein Verfahren zur Bereitstellung von Daten von einem Server (2) an eine Mehrzahl von Benutzerendgeräten (4.x, 4.1 - 4.3) über ein Kommunikationsnetzwerk (3, 5.1 - 5.3), umfassend die folgenden Schritte:
- Beginnen einer Übertragung von Daten an mindestens ein erstes Benutzerendgerät (4.1, R1);
- während der Übertragung von Daten an das erste Benutzerendgerät, auf Erkennen einer Anfrage für die Übertragung der Daten von mindestens einem zweiten Benutzerendgerät (4.2, R2), Durchführen einer Multicast-Übertragung der Daten an das erste und an das zweite Benutzerendgerät;
**gekennzeichnet durch**
- Anfordern von fehlenden Daten (MP), welche nicht mit den Multicast-Daten vom Server an dem zweiten Benutzerendgerät empfangen wurden;
- Herausfiltern der Daten, welche während der Multicast-Übertragung schon am zweiten Benutzerendgerät (4.2) empfangen wurden, **durch** einen Zugangspunkt (5.1).

2. Das Verfahren nach Anspruch 1, wobei das erste Benutzerendgerät (4.1, R1) eine Nachricht an einen Zugangspunkt (5.1) des Netzwerks (3) sendet, um die Übertragung der Daten auszulösen, und wobei der Zugangspunkt (5.1) die Datenpakete der übertragenen Daten mit einer Sitzungskennung (S1) markiert.

3. Das Verfahren nach Anspruch 1, wobei ein Zugangspunkt (5.1) des Netzwerks (3):
- Den Empfang der Daten an dem ersten Benutzerendgerät (4.1, R1) erkennt;
- die Daten an das erste Benutzerendgerät überträgt;
- eine Signatur der Daten als die Sitzungskennung speichert.

4. Das Verfahren nach Anspruch 2, wobei der Zugangspunkt (5.1):
- Die von dem zweiten Benutzerendgerät (4.2, R2) angeforderten Daten scannt;
- die Übereinstimmung der Sitzungskennung und einer Signatur der von dem zweiten Benutzerendgerät angeforderten Daten erkennt;
- die Datenübertragung an das erste Benutzerendgerät und die angeforderte Datenübertragung an das zweite Benutzerendgerät als eine gemeinsame Sitzung identifiziert, um die Multicast-Übertragung durchzuführen.

5. Ein Datenübertragungssystem (1), umfassend:
- Einen Server (2) mit Daten (2.1, 2.2);
- eine Mehrzahl von Benutzerendgeräten (4.x, 4.1 - 4.3), welche eine Anwendung (4.xc) ausführen, die zumindest Teile der Daten verwendet;
- ein Kommunikationsnetzwerk (3, 5.1 - 5.3), welches die Benutzerendgeräte mit dem Server verbindet;
- mindestens einen Zugangspunkt (5.1) mit Multicast-Mitteln (5.xc), welche dazu ausgelegt sind, Daten simultan an eine Mehrzahl der besagten Mehrzahl von Benutzerendgerät zu übertragen;
wobei das Kommunikationsnetzwerk dazu ausgelegt ist, eine Anforderung eines zweiten Benutzerendgeräts (4.2) der besagten Mehrzahl von Benutzerendgeräten für Daten, die schon an ein erstes Benutzerendgerät (4.1) der besagten Mehrzahl von Benutzerendgeräten übertragen werden, zu erkennen und im Anschluss an das Erkennen eine Multicast-Übertragung der Daten an das besagte erste und das besagte zweite Benutzerendgerät durchzuführen,
**dadurch gekennzeichnet, dass**
das zweite Benutzerendgerät dazu ausgelegt ist, nicht mit den Multicast-Daten von dem Server empfangene fehlende Daten anzufordern, wobei der mindestens eine Zugangspunkt Filtermittel (5.xh) umfasst, welche dazu ausgelegt sind, schon von einer angeforderten Datenübertragung an das zweite Benutzerendgerät (4.2) empfangene Daten herauszufiltern.

6. Das System nach Anspruch 5, wobei das zweite Benutzerendgerät (4.2) eine sich von der Anwendung (4.xc) unterscheidende Kommunikationsschicht (Rb2) umfasst, und wobei die Kommunikationsschicht Sendemittel (4.xa) umfasst, welche dazu ausgelegt sind, eine Nachricht an den Server zu senden, und wobei der Server dazu ausgelegt ist, nach Empfang der besagten Nachricht das Bereitstellen von Daten an das zweite Benutzerendgerät auszusetzen.

7. Ein Computerprogramm-Produkt zur Verwendung in einem Datenübertragungssystem (1), wobei das besagte Datenübertragungssystem umfasst:
- Einen Server (2) mit Daten (2.1, 2.2);
- eine Mehrzahl von Benutzerendgeräten (4.x, 4.1 - 4.3), welche eine Anwendung (4.xc) ausführen, die zumindest Teile der Daten verwendet;
- ein Kommunikationsnetzwerk (3, 5.1 - 5.3), welches die Benutzerendgeräte mit dem Server verbindet;
- eine Mehrzahl von Zugangspunkten (3, 5.1-5.3) mit Multicast-Mitteln (5.xc), welche dazu ausgelegt sind, Daten simultan an eine Mehrzahl der besagten Mehrzahl von Benutzerendgeräten zu übertragen;
wobei das Computerprogramm-Produkt auf der Mehrzahl von Zugangspunkten ausführbar ist, um die Mehrzahl von Zugangspunkten zu befähigen, eine Anforderung von einem zweiten Benutzerendgerät (4.2) der besagten Mehrzahl von Benutzerendgeräten für Daten, die schon an ein erstes Benutzerendgerät (4.1) der besagten Mehrzahl von Benutzerendgeräten gesendet wurden, zu erkennen und im Anschluss an das Erkennen eine Multicast-Übertragung der Daten an das besagte erste und das besagte zweite Benutzerendgerät durchzuführen,
**gekennzeichnet durch**
Befähigen des zweiten Benutzerendgeräts, die nicht mit den Multicast-Daten vom Server empfangenen fehlenden Daten (MP) anzufordern, und Befähigen der Mehrzahl von Zugangspunkten, die schon während der Multicast-Übertragung an dem zweiten Benutzerendgerät (4.2) empfangenen Daten herauszufiltern.

8. Ein Zugangspunkt (5.; 5.1 - 5.3), umfassend:
Multicast-Mittel (5.xc), welche dazu ausgelegt sind, Daten simultan an eine Mehrzahl von Benutzerendgeräten zu senden;
**gekennzeichnet durch**
Filtermittel (5.xh), welche dazu ausgelegt sind, schon von einer angeforderten Datenübertragung an das zweite Benutzerendgerät (4.2) empfangene Daten herauszufiltern;
Verbinden, **durch** den Zugangspunkt, der Mehrzahl von Benutzerendgeräten (4.x, 4.1 - 4.3) mit einem Server (2), wobei der Zugangspunkt Erkennungsmittel (5.xd, 5.xg) umfasst, welche dazu ausgelegt sind, eine Anforderung eines zweiten Benutzerendgeräts (4.2) der besagten Mehrzahl von Benutzerendgeräten für Daten, die schon an ein erstes Benutzerendgerät (4.1) der besagten Mehrzahl von Benutzerendgeräten übertragen werden, zu erkennen, und Multicast-Verbindungsaufbaumittel (5.xc), welche dazu ausgelegt sind, bei Erkennen der besagten Anforderung eine Multicast-Übertragung an das besagte erste und das besagte zweite Benutzerendgerät durchzuführen.

## Revendications

1. Procédé de remise de données provenant d'un serveur (2) à une pluralité de terminaux d'utilisateurs finaux (4.x, 4.1 - 4.3) via un réseau de communications (3, 5.1 - 5.3), comprenant les étapes suivantes :
- démarrage d'une transmission des données à au moins un premier terminal d'utilisateur final (4.1, R1);
- pendant la transmission des données au premier terminal d'utilisateur final, suite à la détection d'une requête de transmission des données par au moins un deuxième terminal d'utilisateur final (4.2, R2), établissement d'une transmission de multidiffusion des données au premier et au deuxième terminaux d'utilisateur final ;
**caractérisé par l'étape suivante**
- requête des données manquantes (MP) non reçues avec les données de multidiffusion sur le deuxième terminal d'utilisateur final depuis le serveur ;
- élimination par filtrage des données déjà reçues par le deuxième terminal d'utilisateur final (4.2) pendant la transmission de multidiffusion au moyen d'un point d'accès (5.1).

2. Procédé selon la revendication 1, dans lequel le premier terminal d'utilisateur final (4.1, R1) envoie un message à un point d'accès (5.1) du réseau (3) pour déclencher la transmission des données et dans lequel le point d'accès (5.1) marque les paquets de données des données transmises à l'aide d'un identifiant de session (S1).

3. Procédé selon la revendication 1, dans lequel un point d'accès (5.1) du réseau (3) :
- détecte la réception des données par le premier terminal d'utilisateur final (4.1, R1) ;
- transfère les données au premier terminal d'utilisateur final ;
- stocke une signature des données comme identifiant de session.

4. Procédé selon la revendication 2, dans lequel le point d'accès (5.1) :
- balaye les données demandées par le deuxième terminal d'utilisateur final (4.2, R2) ;
- détecte la correspondance entre l'identifiant de session et une signature des données demandées par le deuxième terminal d'utilisateur final ;
- identifie le transfert de données au premier terminal d'utilisateur final et le transfert des données demandées au deuxième terminal d'utilisateur final en tant que session commune pour établir la transmission de multidiffusion.

5. Système de transmission de données (1) comprenant :
- un serveur (2) comprenant des données (2.1, 2.2) ;
- une pluralité de terminaux d'utilisateurs finaux (4.x, 4.1 - 4.3) exécutant une application (4.xc) qui utilise au moins une partie des données ;
- un réseau de communications (3, 5.1 - 5.3) reliant les terminaux d'utilisateurs finaux au serveur ;
- au moins un point d'accès (5.1) contenant des moyens de multidiffusion (5.xc), adaptés pour transmettre simultanément des données à une pluralité de ladite pluralité de terminaux d'utilisateurs finaux ;
dans lequel le réseau de communications est adapté pour détecter une requête par un deuxième terminal d'utilisateur final (4.2) de ladite pluralité de terminaux d'utilisateurs finaux de données déjà transmises à un premier terminal d'utilisateur final (4.1) de ladite pluralité de terminaux d'utilisateurs finaux et pour établir une transmission de multidiffusion des données auxdits premier et deuxième terminaux d'utilisateurs finaux suite à la détection de ladite requête,
**caractérisé en ce que**
le deuxième terminal d'utilisateur final est adapté pour demander les données manquantes non reçues avec les données de multidiffusion depuis le serveur, dans lequel le au moins un point d'accès comprend des moyens de filtrage (5.xh) adaptés pour éliminer par filtrage les données déjà reçues d'une transmission de données demandées au deuxième terminal d'utilisateur final (4.2).

6. Système selon la revendication 5, dans lequel le deuxième terminal d'utilisateur final (4.2) comprend une couche de communication (Rb2) distincte de l'application (4.xc) et dans lequel la couche de communication comprend des moyens d'envoi (4.xa) adaptés pour envoyer un message au serveur, le serveur étant adapté pour cesser la remise de données au deuxième terminal d'utilisateur final suite à la réception dudit message.

7. Produit de programme informatique destiné à être utilisé dans un système de transmission de données (1), ledit système de transmission de données comprenant :
- un serveur (2) comprenant des données (2.1, 2.2) ;
- une pluralité de terminaux d'utilisateurs finaux (4.x, 4.1 - 4.3) exécutant une application (4.xc) qui utilise au moins une partie des données ;
- un réseau de communications (3, 5.1 - 5.3) reliant les terminaux d'utilisateurs finaux au serveur;
- une pluralité de points d'accès (3, 5.1 - 5.3) contenant des moyens de multidiffusion (5.xc), adaptés pour transmettre simultanément des données à une pluralité de ladite pluralité de terminaux d'utilisateurs finaux ;
dans lequel le produit de programme informatique peut fonctionner sur la pluralité de points d'accès pour permettre à la pluralité de points d'accès de détecter une requête par un deuxième terminal d'utilisateur final (4.2) de ladite pluralité de terminaux d'utilisateurs finaux de données déjà transmises à un premier terminal d'utilisateur final (4.1) de ladite pluralité de terminaux d'utilisateurs finaux et d'établir une transmission de multidiffusion des données auxdits premier et deuxième terminaux d'utilisateurs finaux suite à la détection de ladite requête,
**caractérisé par**
la possibilité pour le deuxième terminal d'utilisateur final de demander les données manquantes (MP) non reçues avec les données de multidiffusion depuis le serveur et la possibilité pour la pluralité de points d'accès d'éliminer par filtrage les données déjà reçues par le deuxième terminal d'utilisateur final (4.2) pendant la transmission de multidiffusion.

8. Point d'accès (5, 5.1 - 5.3) comprenant :
des moyens de multidiffusion (5.xc) adaptés pour transmettre simultanément des données à une pluralité de terminaux d'utilisateurs finaux ;
**caractérisé par**
des moyens de filtrage (5.xh) adaptés pour éliminer par filtrage les données déjà reçues d'une transmission de données demandée au deuxième terminal d'utilisateur final (4.2) ;
le point d'accès reliant la pluralité de terminaux d'utilisateurs finaux (4.x, 4.1 - 4.3) à un serveur (2), dans lequel le point d'accès comprend des moyens de détection (5.xd, 5.xg) adaptés pour détecter une requête par un deuxième terminal d'utilisateur final (4.2) de ladite pluralité de terminaux d'utilisateurs finaux de données déjà transmises à un premier terminal d'utilisateur final (4.1) de ladite pluralité de terminaux d'utilisateurs finaux, et des moyens d'établissement de connexion de multidiffusion (5.xc) adaptés pour établir une transmission de multidiffusion des données auxdits premier et deuxième terminaux d'utilisateurs finaux suite à la détection desdites requêtes.
